# EUROPÄISCHE PATENTANMELDUNG

(11) **EP 0 973 286 A2**
(43) Veröffentlichungstag der Anmeldung: **19.01.2000**
(21) Anmeldenummer: 99113741.5
(22) Anmeldetag: 14.07.1999
(51) Int. Cl.: H04H 1/00, H04B 1/16

(54) **Einrichtung zum gleichzeitigen Empfang mehrerer Rundfunksignale**

(30) Priorität: 16.07.1998 DE 19831928
(71) Anmelder: GRUNDIG Aktiengesellschaft, 90762 Fürth (DE)
(72) Erfinder: Bienefeld, Axel, 90587 Obermichelbach (DE)
(74) Vertreter: Pröll, Jürgen Dipl.-Ing.

(57) **Zusammenfassung**

Die vorliegende Erfindung betrifft eine Einrichtung zum Empfang mehrerer Signale unterschiedlicher Trägerfrequenz, insbesondere eine Einrichtung zum gleichzeitigen Empfang mehrerer Rundfunksignale mit unterschiedlichen Trägerfrequenzen.

Sollen von einem Rundfunkempfänger, beispielsweise einem Rundfunkempfänger der nach dem Radio Daten Standard (RDS) arbeitet, mehrere Rundfunksignale gleichzeitig empfangen werden, weil z. B. Sender mit Alternativfrequenzen überprüft werden sollen, während ein gewählter Sender empfangen und wiedergegeben wird, werden bei bekannten RDS-Rundfunkempfängern mindestens zwei unabhängige Empfangseinrichtungen verwendet. Derartige Rundfunkempfänger sind aber teuer weil Hochfrequenzeinheit, Mischer, Zwischenfrequenzeinheit und Demodulator doppelt vorgesehen werden müssen, wenn zwei Rundfunksignale gleichzeitig empfangen werden sollen.

Bei der vorliegenden Erfindung wird durch die Verwendung phasenkontinuierlicher Signale zum wechselweisen Herabsetzen der Rundfunksignale in einen Zwischenfrequenzbereich, die Auswertung mehrerer Rundfunksignale ermöglicht.

Der Vorteil der Erfindung liegt insbesondere darin, daß mehrere Rundfunksignale mit einem Rundfunkempfänger mit nur jeweils einer Hochfrequenzeinheit, einem Mischer, einer Zwischenfrequenzeinheit und einem Demodulator empfangen werden können.

## Beschreibung

Die vorliegende Erfindung betrifft eine Einrichtung zum quasi gleichzeitigen Empfang mehrerer Signale unterschiedlicher Trägerfrequenz, insbesondere eine Einrichtung zum quasi gleichzeitigen Empfang mehrerer FM-Rundfunksignale mit unterschiedlichen Trägerfrequenzen.

Sollen mit einem Empfänger, beispielsweise einem FM-Rundfunkempfänger, der mit dem Radio Daten System (RDS) arbeitet, mehrere Rundfunksignale gleichzeitig empfangen werden, weil z. B. im Hintergrund Sender mit Alternativfrequenzen überprüft werden sollen, während ein gewählter Sender empfangen und wiedergegeben wird, werden bei bekannten RDS-Rundfunkempfängern mindestens zwei unabhängige Empfangseinrichtungen verwendet.

Derartige Rundfunkempfänger sind aber relativ teuer, da Hochfrequenzeinheit, Mischer, Zwischenfrequenzeinheit und Demodulator jeweils doppelt vorgesehen werden müssen, wenn zwei Rundfunksignale gleichzeitig empfangen und demoduliert werden sollen.

Aus DE-C-40 03 082 ist ein Emptänger für in digitaler Form auf einem insbesondere oberhalb des UKW-Bandes liegenden Träger übertragene Signale einer Tonrundfunksendung mit einer der Eingangsstufe nachgeschalteten Mischstufe und einer Zwischenfrequenzfilterstufe bekannt. Der Mischoszillator der Mischstufe ist in seiner Eigenfrequenz taktweise um vorgegebene Frequenzdifferenzen veränderbar. An die Zwischenfrequenzfilterstufe sind mehrere Demodulatoren für dem Träger aufmodulierte Unterträger angeschlossen. Die von dem Unterträger demodulieten binären Signale sind in einem Schreib-Lesespeicher zwischenspeicherbar. Die Steuerschaltung für den Mischoszillator umfaßt einen Speicher für die beim Übergang in den Folgetakt vorzunehmenden Frequenzänderungen und die Taktdauer ist groß gegenüber der Dauer einer binären Signalperiode. Nachteilig hierbei ist, daß auf den jeweiligen Sender direkt umgeschaltet werden muß und nur ein Sender empfangbar ist.

Aus DE-A-35 10 580 ist ein Verfahren zur Verbesserung des Empfangs von Radiosignalen, insbesondere im VHF- und UHF-Bereich, mittels mehrerer Antennen bekannt. Hierbei wird das von jeder Antenne empfangene Signal mit einem im Empfänger erzeugten Träger gemischt und die entstehenden Mischsignale mit steuerbarer Phasenlage zueinander einem gemeinsamen ZF-Verstärker zugeführt.

Aus DE-A-2 039 436 ist ein Vielkanal-Überlagerungsempfänger für eine bestimmte Anzahl von Empfangskanälen bekannt. Hierbei wird zum Empfang eines der Empfangskanäle direkt auf diese umgeschlatet.

Aus DE-A-1 273 607 ist eine Anlage zum Frequenz-Diversityempfang auf mindestens zwei Senderfrequenzen bekannt. Beim Unterschreiten eines kleinsten zulässigen Empfangspegels wird der Oszillator des Überlagerungsempfängers auf die zweite Sendefrequenz umgeschaltet.

Aus US-A-5,014,348 ist ein Empfänger bestehend aus einer Receivereinheit, einer Mikroprozessoreinheit, einer Frequenzsysntheseschaltung und einer Einheit zur überpfüfung der eingestellten Frequenz bekannt. Anhand der Ausgangssignale wird erkannt, ob ein Musikkanal oder ein Informationskanal empfangen wird.

Aus US-A4,616,364 ist ein Empfänger bekannt, der nach dem Frequenzhopping-Verfahren arbeitet.

Aus WO 97/23958 ist ein Empfänger bekannt, mittels welchem zwei Signale miteinander verglichen werden können.

Es ist daher Aufgabe der vorliegenden Erfindung, eine Einrichtung anzugeben die zum Empfang mehrerer Signale unterschiedlicher Trägerfrequenz geeignet ist, insbesondere eine Einrichtung zum quasi gleichzeitigen Empfang zweier FM-Rundfunksignale mit unterschiedlichen Trägerfrequenzen, die einfacher als die aus dem Stand der Technik bekannte Einrichtung aufgebaut ist.

Bei der erfindungsgemäßen Einrichtung zum Empfang mehrerer Signale unterschiedlicher Trägerfrequenzen, insbesondere einer Einrichtung zum quasi gleichzeitigen Empfang zweier FM-Rundfunksignale mit unterschiedlichen Trägerfrequenzen, mit einer Einheit zum Umsetzen der Signale in einen Zwischenfrequenzbereich, einer Einheit zur Umwandlung der Signale im Zwischenfrequenzbereich in ein digitales Signal, und einer Einheit zur Auswertung des digitalen Signals, wird diese Aufgabe dadurch gelöst, daß eine Frequenzsyntheseeinheit vorgesehen ist, die abschnittsweise phasenkontinuierliche Signale unterschiedlicher Frequenz erzeugt, und daß die abschnittsweise phasenkontinuierlichen Signale wechselweise in der Einheit zum Umsetzen der Rundfunksignale in den Zwischenfrequenzbereich verwendet werden.

Die Erfindung geht dabei von der Überlegung aus, daß durch die Verwendung abschnittsweise phasenkontinuierlicher Signale zum wechselweisen Herabsetzen der Rundfunksignale in einen Zwischenfrequenzbereich, die Auswertung zweier Signale, insbesondere FM-Rundfunksignale, möglich ist.

Der Vorteil der Erfindung liegt insbesondere darin, daß mehrere Signale, insbesondere Rundfunksignale, mit einem Empfänger mit nur jeweils einer Hochfrequenzeinheit, einem Mischer, einer Zwischenfrequenzeinheit und einem Demodulator empfangen werden können.

Weitere Vorteile der vorliegenden Erfindung ergeben sich aus den abhängigen Ansprüchen sowie der nachfolgenden Beschreibung der erfindungsgemäßen Einrichtung anhand von Figuren eines Ausführungsbeispiel.

Es zeigt
- Fig. 1: ein Prinzipschaltbild eines Ausführungsbeispiels einer erfindungsgemäßen Einrichtung zum gleichzeitigen Empfang mehrerer Rundfunksignale,
- Fig. 2: die Verarbeitung der verschiedenen von der Einrichtung nach Fig. 1 empfangenen Rundfunksignale,
- Fig. 3: ein Prinzipschaltbild einer Ausführungsform einer in der Einrichtung nach Fig. 1 verwendeten Frequenzsyntheseeinheit zur direkten digitalen Synthese zweier abschnittsweise phasenkontinuierlicher Signale unterschiedlicher Frequenz, und
- Fig. 4: den Verlauf eines von der Frequenzsyntheseeinheit nach Fig. 3 synthetisierten Signals.

Zur Erleichterung des Verständnisses der vorliegenden Erfindung sind in den Figuren nur die Bestandteile der Einrichtung zum Empfang zweier FM-Rundfunksignale dargestellt, die im Zusammenhang mit der Erfindung von Bedeutung sind. Mit gleichen Bezugszeichen gekennzeichnete Bestandteile in einzelnen Figuren entsprechen einander.

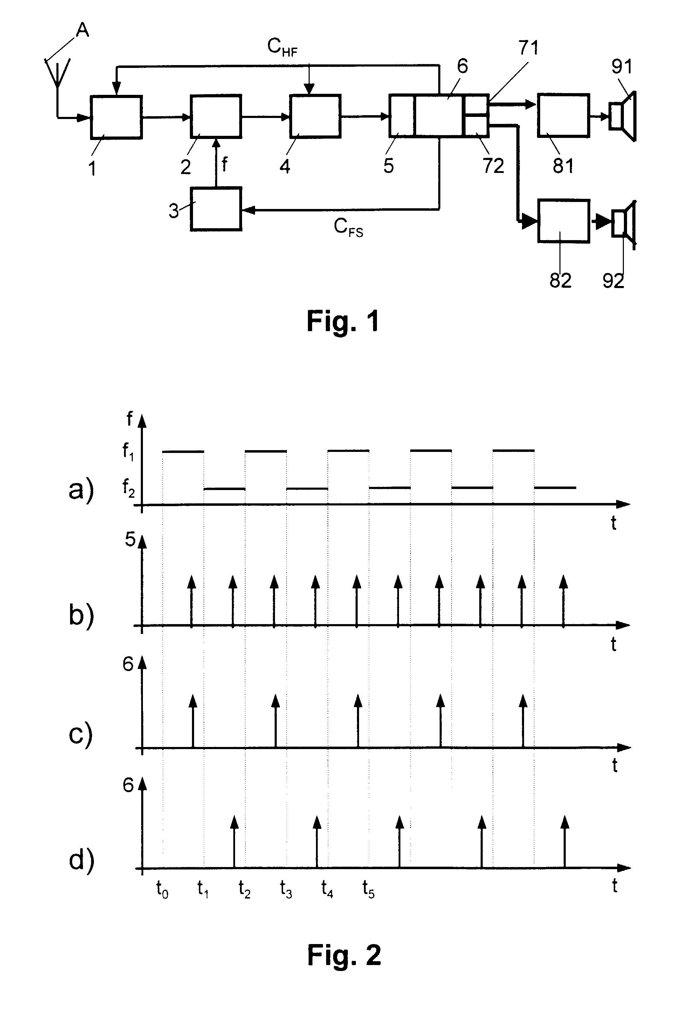

In Fig.1 ist ein Prinzipschaltbild eines Ausführungsbeispiels einer erfindungsgemäßen Einrichtung zum gleichzeitigen Empfang zweier FM-Rundfunksignale dargestellt. Die Einrichtung weist eine Antenne A, eine Hochfrequenzeinheit 1, die beispielsweise von einem Eingangsfilter und einer Vorstufe gebildet werden kann, einen Mischer 2, einer speziellen Frequenzsyntheseeinheit 3, welche in der Lage ist ein für zwei Frequenzen abschnittsweise phasenkontinuierliches Ausgangssignal zu liefern, eine Zwischenfrequenzeinheit 4, einen Analog/Digital-Wandler 5, eine Steuer- und Signalverarbeitungseinheit 6, die beispielsweise von einem Mikrocomputer (µC), einem digitalen Signalprozessor (DSP) oder einer Kombination aus beiden gebildet werden kann, zwei Digital/Analog-Wandler 71, 72, zwei Verstärker 81 und 82 und zwei Lautsprecher 91 und 92 auf. Die Lautsprecher 91 und 92 dienen zur parallelen Wiedergabe der beiden quasi parallel empfangenen FM-Rundfunksignale.

Von der Antenne A empfangene Rundfunksignale werden in der Hochfrequenzeinheit 1 gefiltert und vorverstärkt. Die so aufbereiteten Hochfrequenzsignale werden in den Mischer 2 eingespeist, in den außerdem ein von der Frequenzsyntheseeinheit 3 synthetisiertes abschnittsweises phasenkontinuierliches Signal f eingespeist wird und hierdurch wechselweise in den Zwischenfrequenz-Bereich gemischt wird. Hierdurch entsteht ein gemultiplextes Zwischenfrequenzsignal, welches die Informationen beider FM-Rundfunksignale enthält.

Das Zwischenfrequenzsignal wird von der Zwischenfrequenzeinheit 4 aufbereitet, z. B. gefiltert und verstärkt. Das aufbereitete Zwischenfrequenzsignal wird vom Analog/Digital-Wandler 5 in ein digitales Signal gewandelt, aus dem im DSP 6 direkt die zu empfangenden Rundfunksignale demoduliert werden. Die demodulierten FM-Rundfunksignale werden von den Digital/Analog-Wandlern 71, 72 in analoge Signale gewandelt und von den Verstärkern 81, 82 für die Wiedergabe mit dem oder den Lautsprechern 91 und 92 verstärkt.

Um den quasi parallelen Empfang der zwei FM-Rundfunksignale zu ermöglichen, muß die Umschaltung zwischen den beiden Synthesefrequenzen in der Frequenzsystheheseinheit 3 mit einer Taktfrequenz erfolgen, welche mindestens doppelt so hoch ist, wie die maximalen in den FM-Rundfunksignalen vorkommenden und zu demodulierenden Frequenzen in den Signalanteilen. Hierdurch wird im Zwischenfrequenzbereich ein Multiplexsignal erzeugt, welches die relevanten Signalanteile der beiden zu empfangenden FM-Rundfunksignale enthält. Im weiteren muß die Filterbandbreite bei der Zwischenfrequenzfilterung größer sein, als die Taktfrequenz zur Umschaltung zwischen beiden Synthesefrequenzen, um ein Einschwingen der Zwischenfrequenzeinheit zu gewährleisten.
Die zu empfangenden FM-Rundfunksignale bzw. die Trägerfrequenzen der FM-Rundfunksignale werden dadurch ausgewählt, daß die von der Frequenzsyntheseeinheit 3 erzeugten Signale f so gewählt sind, daß beim Mischen der Signale f mit den von der Hochfrequenzeinheit 1 stammenden Hochfrequenzsignale die zu empfangenden FM-Rundfunksignale, die im Hochfrequenzsignal enthalten sind, in die verwendete Zwischenfrequenzlage herabgesetzt werden. Durch Änderung der Frequenzen der von der Frequenzsyntheseeinheit 3 erzeugten Signalen f sind somit verschiedene Rundfunksignale empfangbar bzw. auswählbar. Dazu ist eine Steuerleitung C_{FS} von der Steuereinheit 6 zur Frequenzsyntheseeinheit 3 vorgesehen. Eine weitere Steuerleitung C_{HF} von der Steuereinheit 6 zur Hochfrequenzeinheit 1 und/oder zur Zwischenfrequenzeinheit 4 dient zur Anpassung der entsprechenden Stufen auf die Feldstärke der zu empfangenden FM-Rundfunksignal bzw. deren Trägerfrequenzen.

Bei der oben beschriebenen direkten digitalen Demodulation von Rundfunksignalen im Zwischenfrequenzbereich, dem sogenannten Zf-Sampling, ist es möglich zwei oder mehr Rundfunksignale gleichzeitig auszuwerten. Dazu müssen synchron zur Abtastfrequenz des Analog/Digital-Wandlers 5 die zu empfangenden Rundfunksignale - und damit das von der Frequenzsyntheseeinheit 3 erzeugte Signal f - zyklisch umgeschaltet werden.

In Fig. 2 ist eine entsprechende Umschaltung dargestellt. Fig. 2 a) zeigt das von der Frequenzsyntheseeinheit 3 erzeugte Signal f. Zum Empfang zweier Rundfunksignale wird das Signal f zyklisch zwischen zwei Frequenzen f₁ und f₂ umgeschaltet. Der Taktzyklus der Umschaltung wird hierbei so gewählt, daß das Abtasttheorem für jeden zu empfangenden FM-Rundfunksender nicht verletzt wird. Während des Zeitraums t₀-t₁ wird Frequenz f₁ erzeugt, während des Zeitraums t₁-t₂ wird Frequenz f₂ erzeugt, anschließend wieder f₁ usw. Synchron dazu wird, wie in Fig. 2 b) dargestellt, das von der Zwischenfrequenzeinheit 4 stammende Zwischenfrequenzsignal vom Analog/Digital-Wandler 5 abgetastet und digitalisiert. In den Fig. 2 c) und d) ist schließlich die getrennte Verarbeitung der von den beiden zu empfangenden Rundfunksignalen stammenden digitalen Signale dargestellt. Dazu wird im DSP 6 der vom Analog/Digital-Wandler 5 stammende Datenstrom entsprechend der für das jeweilige Rundfunksignal festliegenden Zeiträume getrennt, z. B. t₀-t₁, t₂-t₃, t₄-t₅ usw. für das erste Rundfunksignal.

Hinsichtlich der Umschaltvorgänge ist bei der Auslegung der Hochfrequenzeinheit 1 und der Zwischenfrequenzeinheit 4 zu berücksichtigen, daß innerhalb der zur Verfügung stehenden Umschaltzeiträume sowohl die Regelung der Hochfrequenzeinheit 1, sowie gegebenenfalls der Zwischenfrequenzeinheit 4, bewirkt werden muß, als auch die Einschwingvorgänge der Zwischenfrequenzeinheit abgeschlossen sein müssen, damit bei der Abtastung durch den Analog/Digital-Wandler 5 das jeweilige in den Zwischenfrequenzbereich herabgesetzte Rundfunksignal stabil vorliegt.

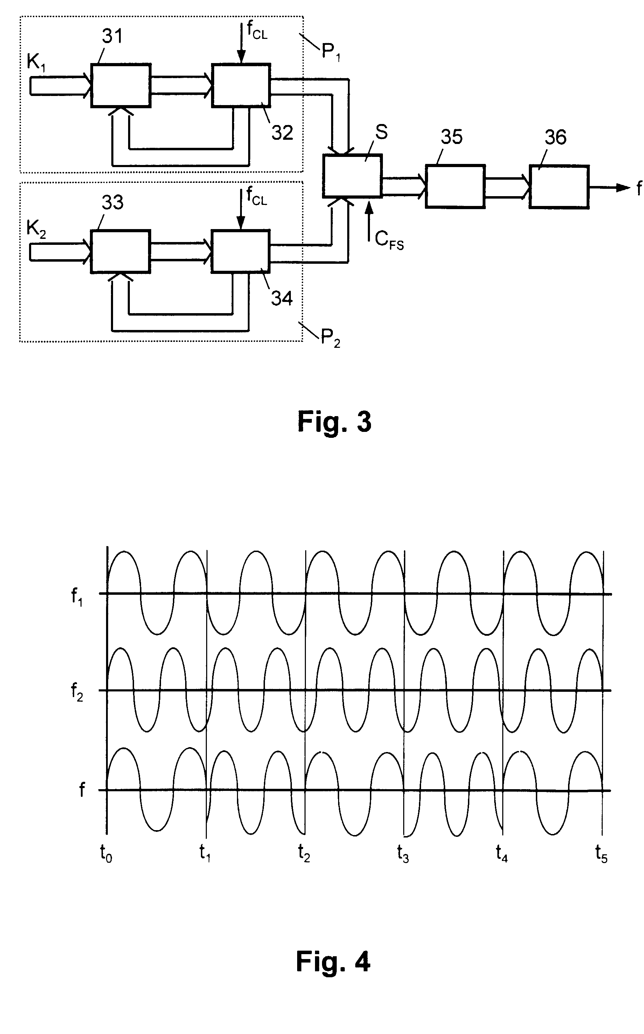

Als weiteres Kriterium ist zu beachten, daß für die im Zwischenfrequenzbereich gemultiplext vorliegenden FM-Rundfunksignale jeweils Phasenkontinuität gewährleistet sein muß, d. h. durch den zyklischen Wechsel der zu empfangenden FM-Rundfunksignale darf es nicht zu Phasensprüngen bei den jeweiligen FM-Rundfunksignalen im Zwischenfrequenzbereich kommen. Da die zu empfangenden FM-Rundfunksignale durch das von der Frequenzsyntheseeinheit 3 erzeugte Signal f in den Zwischenfrequenzbereich herabgesetzt werden, ist diese Forderung gleichbedeutend mit einer abschnittsweisen Phasenkontinuität der von der Frequenzsyntheseeinheit 3 erzeugten Signale unterschiedlicher Frequenz f₁ und f₂. In Fig. 4 ist diese abschnittsweise realisierte Phasenkontinuität des von der Frequenzsyntheseeinheit 3 erzeugten Signals f für zwei unterschiedliche Frequenzen f₁ und f₂ dargestellt.

In einer ersten, nicht in den Figuren dargestellten, Ausführungsform kann die Frequenzsyntheseeinheit 3 von zwei kontinuierlich arbeitenden Oszillatoren gebildet werden, welche die benötigten Signale mit den Frequenzen f₁ und f₂ für die gleichzeitige Auswertung, bzw. den gleichzeitigen Empfang, von zwei FM-Rundfunksignalen erzeugen. Werden mehr als zwei Oszillatoren verwendet, können entsprechend viele FM-Rundfunksignale gleichzeitig empfangen werden. Durch den kontinuierlichen Betrieb der Oszillatoren ist die Phasenkontinuität der einzelnen Signale mit den unterschiedlichen Frequenzen f₁ und f₂ zu den jeweiligen Umschaltzeitpunkten gewährleistet. Die Signale der einzelnen Oszillatoren können durch einen Schalter oder Multiplexer, gesteuert durch das Steuersignal C_{FS}, an den Mischer 2 weitergeleitet werden.

In einer zweiten Ausführungsform kann die Frequenzsyntheseeinheit 3 als Einheit zur direkten digitalen Synthese aufgebaut sein. Eine derartige Frequenzsyntheseeinheit zur Synthese von zwei phasenkontinuierlichen Signalen unterschiedlicher Frequenz ist in Fig. 3 dargestellt. Zur Erzeugung abschnittsweise kontinuierlicher Phaseninformationen für die beiden zu synthetisierenden, sich in der Frequenz unterscheidenden Signale, ist eine erste und eine zweite Einheit P₁ und P₂ zur Erzeugung der Phaseninformation für das jeweilige Signal vorgesehen.

Die Einheit P₁ zur Erzeugung der ersten Phaseninformation für das Signal mit einer ersten Frequenz f₁ weist einen Addierer 31 und einen damit verbundenen Phasenregister 32, beispielsweise als Latch oder Speicher realisiert, auf. Bei der direkten digitalen Synthese wird ein Eingangswert K₁, der die Frequenz f₁ festlegt, bei jedem Taktzyklus einer Arbeitsfrequenz f_{CL} von dem Addierer 31 zu dem im Phasenregister 32 gespeicherten Wert addiert. Der bei der Addition gebildete Wert wird anschließend im Phasenregister 32 gespeichert und an eine Syntheseeinheit 35, 36 weitergeleitet. Der im Phasenregister 32 gespeicherte Wert dient zur Adressierung einer Tabelle, in der beispielsweise eine Sinus- oder Cosinus-Funktion und/oder eine Funktion, welche abschnittsweise einer Sinus- oder Cosinusfunktion entspricht, abgelegt ist. Die Tabelle kann in einem Speicher 35, beispielsweise einem ROM-Speicher, abgelegt sein. Die in der Einheit zur Erzeugung der Phaseninformation P₁ erzeugten Werte werden über eine Auswahleinheit S, beispielsweise einen Schalter, Bus-Treiber oder Multiplexer, an den Speicher 35 weitergeleitet, wo er zur Adressierung der abgelegten Werte der Sinus-Funktion dient. Die aus dem Speicher 35 ausgegebenen Werte der Sinus-Funktion werden von einem Digital/Analog-Wandler 36 in eine sinusförmige Ausgangsspannung f umgesetzt. Das Ausgangssignal f hat die gewünschte zu synthetisierende erste Frequenz f₁, die durch die Größe des Eingangswerts K₁ festgelegt ist. Das Ausgangssignal f kann beispielsweise mit einer Sampling-Rate vom Digital/Analog-Wandler 36 erzeugt werden, die der Arbeitsfrequenz f_{CL} entspricht.

Die zweite Einheit zur Erzeugung der zweiten Phaseninformation P₂ ist wie die erste Einheit P₁ aufgebaut. Sie enthält einen Addierer 33 und einen Speicher 34. Die Funktionsweise der zweiten Einheit zur Erzeugung der zweiten Phaseninformation P₂ entspricht der Funktionsweise der ersten Einheit zur Erzeugung der ersten Phaseninformation P₁. Durch einen Eingangswert K₂ wird der Wert der zu synthetisierenden Frequenz f₂ festgelegt.

Mittels eines Steuersignals C_{FS} kann am Schalter S ausgewählt werden, welche der Frequenzen f₁ oder f₂ aus den ersten oder zweiten Phaseninformationen P₁ oder P₂ von der Syntheseeinheit 3, 4 synthetisiert wird und am Ausgang f zur Verfügung steht.

In Fig. 4 sind die beiden mit den Frequenzen f₁ und f₂ zu synthetisierenden Signale, sowie das Ausgangssignal f der Frequenzsyntheseeinheit zur direkten digitalen Synthese dargestellt. Das Ausgangssignal f weist während des Zeitraums t₀-t₁ die Frequenz f₁ auf, während des Zeitruams t₁-t₂ die Frequenz f₂, während des Zeitraums t₂-t₃ erneut die Frequenz f₁ usw. Zur Frequenzänderung des Ausgangssignals f wird, wie oben beschrieben, der Schalter S über das Steuersignal C_{FS} zu den vorgegebenen Zeitpunkten t₁ bis t₄ angesteuert. Dadurch werden während der genannten Zeiträume abwechselnd die Werte der Einheiten zur Erzeugung der Phaseninformationen P₁ oder P₂ ausgewählt. Da die Einheiten zur Erzeugung der Phaseninformationen P₁ oder P₂ kontinuierlich betrieben werden, entspricht die Phase des Ausgangssignals f der Frequenzsyntheseeinheit zur direkten digitalen Synthese der Phase des jeweiligen Signals f₁ oder f₂, wie in Fig. 4 dargestellt.

Das erzeugte Ausgangssignal f verhält sich damit so, als ob zwischen zwei kontinuierlich arbeitenden Oszillatoren zu den vorgegebenen Zeitpunkten t₁ bis t₄ umgeschaltet werden würden.
Neben der in Fig. 3 dargestellten Ausführungsform für zwei phasenkontinuierliche Signale unterschiedlicher Frequenz können mehr als zwei phasenkontinuierliche Signale unterschiedlicher Frequenz dadurch erzeugt werden, daß für jedes mit einer unterschiedlichen Frequenz zu synthetisierende Signal eine eigene Einheit zur Erzeugung der Phaseninformation vorgesehen wird. Darüber hinaus muß ein Schalter oder Multiplexer vorgesehen werden, der eine Anzahl von Eingängen aufweist, die der Anzahl der zu synthetisierenden Signale entspricht. Werden mehr als zwei Signale oder Frequenzen synthetisiert, können entsprechend viele Rundfunksignale gleichzeitig empfangen werden.

## Patentansprüche

1. Einrichtung zum Empfang mindestens zweier Signale unterschiedlicher Trägerfrequenzen, insbesondere eine Einrichtung zum gleichzeitigen Empfang mindestens zweier Rundfunksignale mit unterschiedlichen Trägerfrequenzen, mit
einer Einheit (2) zum Herabsetzen der Signale in einen Zwischenfrequenzbereich,
einer Einheit (5) zur Umwandlung des Signals im Zwischenfrequenzbereich in ein digitales Signal, und
einer Einheit (6) zur Auswertung des digitalen Signals,
**dadurch gekennzeichnet,**
daß eine Frequenzsyntheseeinheit (3) vorgesehen ist, die abschnittsweise phasenkontinuierliche Signale (f₁,f₂) unterschiedlicher Frequenz erzeugt, und daß die phasenkontinuierlichen Signale (f₁,f₂) wechselweise in der Einheit (2) zum Herabsetzen der Signale in den Zwischenfrequenzbereich verwendet werden.

2. Einrichtung nach Anspruch 1,
**dadurch gekennzeichnet,**
daß die Frequenzsyntheseeinheit (3) mindestens zwei Frequenzsyntheseschaltungen, insbesondere zwei Oszillatoren, aufweist, welche die phasenkontinuierlichen Signale (f₁,f₂) unterschiedlicher Frequenz erzeugen.

3. Einrichtung nach Anspruch 1 oder 2,
**dadurch gekennzeichnet,**
daß die Frequenzsyntheseeinheit (3) eine Einheit zur direkten digitalen Synthese ist, welche die abschnittsweise phasenkontinuierlichen Signale (f₁,f₂) unterschiedlicher Frequenz erzeugt.

4. Einrichtung nach Anspruch 3
**dadurch gekennzeichnet,**
daß die Frequenzsyntheseeinheit (3) zur Erzeugung mehrerer phasenkontinuierlicher Signale eine erste Einheit zur Erzeugung einer ersten Phaseninformation (P₁) für ein erstes zu synthetisierendes Signal mit einer ersten vorgebbaren Frequenz (f₁) aufweist, und die erste Phaseninformation in einer Syntheseeinheit (35,36) in ein Ausgangssignal (f) umgesetzt wird, daß mindestens eine weitere Einheit zur Erzeugung einer weiteren Phaseninformation (P₂) für ein weiteres zu synthetisierendes Signal mit einer weiteren vorgebbaren Frequenz (f₂) vorgesehen ist, und
daß eine Auswahleinheit (S) vorgesehen ist, die die erste oder eine weitere Phaseninformation (P₁,P₂) auswählt, wobei die Auswahleinheit (S) mit der Syntheseeinheit (35,36) verbunden ist und die ausgewählte Phaseninformation an die Syntheseeinheit (35,36) weiterleitet.

5. Einrichtung nach Anspruch 4,
**dadurch gekennzeichnet,**
daß die Einheiten zur Erzeugung der Phaseninformationen (P₁,P₂) jeweils einen Addierer (31,33) sowie jeweils einen mit dem Addierer (31,33) verbundenen Speicher (32,34) aufweisen, und
daß jeweils ein Eingangswert (K₁,K₂) vorgesehen ist, der die zu synthetisierende Frequenz (f₁,f₂) bestimmt.

6. Einrichtung nach Anspruch 5,
**dadurch gekennzeichnet**,
daß die Speicher (32,34) von Latches gebildet werden.

7. Einrichtung nach einem der Ansprüche 4 bis 6,
**dadurch gekennzeichnet**,
daß die Syntheseeinheit (35,36) einen Speicher (35) und einen Digital/Analog-Wandler (36) enthält.

8. Einrichtung nach Anspruch 7,
**dadurch gekennzeichnet**,
daß der Speicher (35) von einem ROM-Speicher gebildet wird.

9. Einrichtung nach einem der Ansprüche 7 oder 8,
**dadurch gekennzeichnet**,
daß im Speicher (35) eine Tabelle gespeichert ist, die einer Funktion, insbesondere einer Sinus- oder Cosinus-Funktion, entspricht und/oder abschnittsweise einer Sinus- oder Cosinus-Funktion entspricht.

10. Einrichtung nach einem der Ansprüche 4 bis 8,
**dadurch gekennzeichnet,**
daß die Auswahleinheit (S) von einem Schalter oder einem Multiplexer oder Bustreibern gebildet wird.
